# EUROPEAN PATENT SPECIFICATION

(11) **EP 2 726 922 B1**
(45) Date of publication and mention of the grant of the patent: **31.05.2017**
(21) Application number: 12737728.1
(22) Date of filing: 28.06.2012
(51) Int. Cl.: G02B 6/138

(54) **METHODS AND SYSTEMS FOR TRIMMING PHOTONIC DEVICES**
VERFAHREN UND SYSTEME ZUM TRIMMEN FOTONISCHER BAUELEMENTE
PROCÉDÉS ET SYSTÈMES D'AJUSTEMENT DE DISPOSITIFS PHOTONIQUES

(30) Priority: 28.06.2011 GB 201110948
(43) Date of publication of application: 07.05.2014
(73) Proprietor: Universiteit Gent, 9000 Gent (BE); IMEC VZW, 3001 Leuven (BE)
(72) Inventor: BAETS, Roeland, B-9800 Deinze (BE); DE CORT, Wout, B-9000 Gent (BE); BEECKMAN, Jeroen, B-9550 Hillegem (BE); NEYTS, Kristiaan, B-9000 Gent (BE)
(74) Representative: Wauters, Davy Erik Angelo
(86) International application number: PCT/EP2012/062649
(87) International publication number: WO 2013/001046

(56) References cited:
- EP-A1- 1 223 443
- EP-A1- 2 081 063
- EP-A2- 0 331 233
- WO-A1-2005/064375
- WO-A1-2006/106305
- WO-A1-2006/133820
- CAI TAO ET AL: "An efficiently tunable microring resonator using a liquid crystal-cladded polymer waveguide", APPLIED PHYSICS LETTERS, AIP, AMERICAN INSTITUTE OF PHYSICS, MELVILLE, NY, US, vol. 97, no. 12, 24 September 2010 (2010-09-24), pages 121109-121109, XP012136940, ISSN: 0003-6951, DOI: 10.1063/1.3492848
- LINJIE ZHOU ET AL: "Athermalizing and Trimming of Slotted Silicon Microring Resonators With UV-Sensitive PMMA Upper-Cladding", IEEE PHOTONICS TECHNOLOGY LETTERS, IEEE SERVICE CENTER, PISCATAWAY, NJ, US, vol. PP, no. 17, 1 September 2009 (2009-09-01), pages 1175-1177, XP011269237, ISSN: 1041-1135
- A.CHEN ET AL.: "All-organic and organic-silicon photonic ring micro-resonators", SPIE, PO BOX 10 BELLINGHAM WA 98227-0010 USA, vol. 5708, 2005, pages 187-197, XP040199867,

## Description

### Field of the invention

The invention relates to the field of photonic device manufacturing. More particularly, the present invention relates to the field of trimming of one or more photonic components, photonic devices or photonic circuits.

### Background of the invention

Optical filter structures integrated on a chip are already being used in optical communication networks (e.g. wavelength division multiplexing). The requirements for these devices are often very stringent as very narrow wavelength bands need to be filtered out of a broad spectrum. Silicon-on-insulator (SOI) is a widely used material system for integrated optics as it allows mass production of on-chip devices. The waveguides typically are defined with deep-UV lithography. At present the wavelength used is 193nm or smaller and very detailed fabrication is possible. However, the characteristics of optical filters can still be unpredictable in a less than perfectly fabricated device. It is therefore still impossible to guarantee that the designed specifications will be met. For devices like optical filters with a very narrow bandwith it may be necessary to adjust them after fabrication so that they operate according to the desired specifications. This process is called trimming. The most straightforward method to do this is to incorporate a resistive heater on the devices, as described by Dong et al. in Optics Express 18 (2010) 20298, so they can be tuned thermally. This is however a power consuming technique as it requires a constant current supply. Another method that has been researched in SOI is compacting the oxide layer around the waveguide as described by Schrauwen et al. US 2011/0013874. The effective index of the waveguide mode is then altered due to strain. This method is expensive, slow and difficult and cannot be used in mass production. Yet another method uses UV-sensitive PMMA as a top cladding on slotted ring resonators, as described by Zhou et al in Photonic technology Letters 21 (2009) 1175. The trimming here is done with UV illumination. The refractive index variation in the cladding is only very small and the trimming range is limited, even with slot waveguides. WO2006/133820, EP1223443 and EP0331233 are also relevant documents with respect to the invention.

### Summary of the invention

It is an object of embodiments of the present invention to provide good methods and systems for trimming photonic devices and photonic devices thus obtained. It is an advantage of embodiments according to the present invention that a relative large range for trimming photonic devices can be obtained, such as for example inducing a wavelength shift of 30 to 35 nm for the photonic component, allowing not only compensating for manufacturing errors but also allowing the fabrication of standard components to which a large change can be applied using trimming to bring them into particular specs. In other words, it is an advantage of embodiments of the present invention that trimming can be used for generating custom-made photonic components based on standard components.

It is an advantage of at least some embodiments according to the present invention that the trimming can be evaluated using properties expressing the functionality of photonic devices, thus allowing correction for all imperfections having an effect on the functionality of the photonic devices.

It is an advantage of embodiments according to the present invention that a permanent solution for trimming components is provided, so that after an initial trimming process no power is further required to maintain the trimmed state.

It is an advantage of embodiments according to the present invention that, for trimming a plurality of chips on a device, at least part of the steps of the method for trimming can be done in batch, thus resulting in methods being more efficient than methods where individual trimming of components is required. It is an advantage of embodiments according to the present invention that an efficient method for trimming can be obtained, e.g. less time consuming than e-beam.

The above objective is accomplished by a method and device according to the present invention.

The present invention relates to a method for trimming at least one photonic device, the method comprising obtaining one or more photonic devices comprising at least one component supporting propagation of electromagnetic radiation and a covering layer comprising a polymerisable liquid crystal, determining, for a selected photonic device selected from the one or more photonic devices, based on an in situ measurement of a parameter of the selected photonic device, a selected liquid crystal orienting condition to be applied to the covering layer comprising the polymerisable liquid crystal resulting in a preferred value for an electromagnetic property of the selected photonic device, and while applying the liquid crystal orienting condition, polymerizing the polymerisable liquid crystal covering layer of said selected photonic device, thus obtaining a polymerized liquid crystal on said selected photonic device. The present invention also relates to a trimmed photonic device comprising at least one component for supporting propagation of radiation and a polymerized liquid crystal covering layer on top of the component, the polymerized liquid crystal covering layer being polymerized in a state adapting the effective refractive index of the at least one component.

The present invention further relates to a system for obtaining a trimmed photonic device, the system comprising at least one component for supporting propagation of radiation and a polymerisable liquid crystal cladding layer, and a liquid crystal orienting condition application means being positioned for inducing a liquid crystal orienting condition in the polymerisable liquid crystal cladding layer.

The present invention also relates to the use of a system as described above for trimming a photonic device.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

### Brief description of the drawings

FIG. 1 illustrates a device comprising a cladding layer comprising a polymerized liquid crystal, according to an embodiment of the present invention.
FIG. 2 illustrates an overview of a method for trimming, according to an embodiment of the present invention.

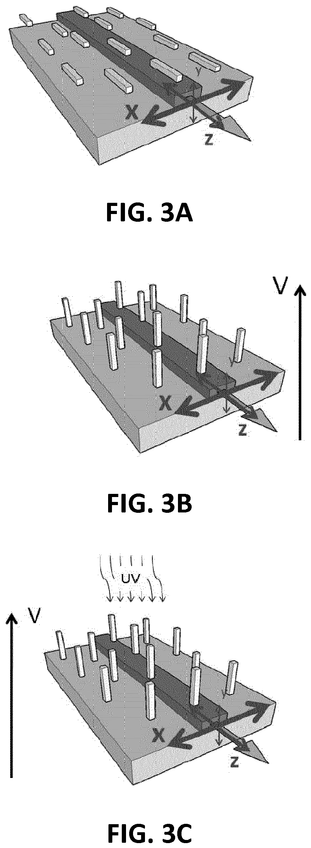

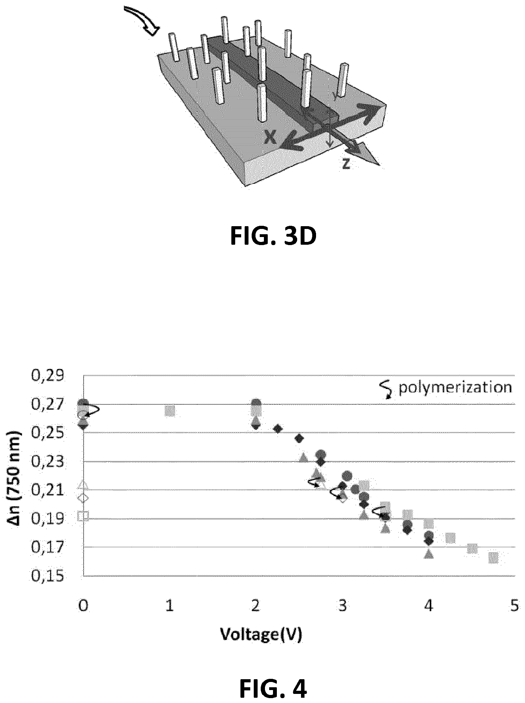

FIG. 3a to FIG. 3d illustrates a schematic view of waveguides covered with polymerizable liquid crystal as part of the cladding layer, whereby FIG. 3A indicates the situation before fixation without a voltage being applied, FIG. 3B indicates the situation before fixation with a voltage applied in a direction perpendicular to the substrate results in a director being reoriented vertically, FIG. 3C indicates the step of illuminating with UV light at the moment a voltage is applied in a direction perpendicular to the substrate and FIG. 3D indicates the fixed reorientation due to UV illumination, even after the voltage has been turned OFF, according to embodiments of the present invention.
FIG. 4 illustrates the average birefringence of the polymerizable liquid crystal in a cell as function of voltage, wherein the filled markers are values before polymerization and the empty markers are values after polymerization.
FIG. 5 is a schematic representation of a cell comprising a component to be trimmed, used for trimming a component according to an embodiment of the present invention.
FIG. 6 is a photographic representation of a cell comprising a component to be trimmed, used for trimming a component according to an embodiment of the present invention.
FIG. 7 illustrates the effect of an applied voltage and polymerization on the transmission spectrum of a ring resonator for a particular example whereby 10V is applied during polymerization, illustrating features and advantages of embodiments of the present invention.
FIG. 8 illustrates experimental results of the change in resonance wavelength for increasing voltage before and after polymerization for a particular example whereby 50V is applied during polymerization, illustrating features and advantages of embodiments of the present invention.
FIG. 9a to FIG. 9c illustrates three examples of methods for correcting for a shift in electromagnetic property of an optical device due to polymerization, as can be used in embodiments according to the present invention.
FIG. 10 illustrates an example of a liquid crystal tunable filter, which can exploit features of embodiments according to the present invention.
FIG. 11 illustrates an example of a system for directing and shaping an optical beam, which can exploit features of embodiments according to the present invention.
FIG. 12 illustrates an example of transmission spectra recorded during different phases of polymerization of the liquid crystal layer, as can be used in a method according to embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to trimming, reference is made to the fact that properties of a photonic device or component are adapted towards preferred values, e.g. towards a set of specs, to reach a desired functionality of the photonic device. Such properties may be electromagnetic properties of the device, such as for example optical or microwave properties. Trimming thereby also may be referred to as fixed or static tuning or adapting, as after the trimming process, the properties are fixed or static. The specs thereby can initially be not reached due to manufacturing errors or variability on manufacturing. Alternatively, the specs may also be defined after mass processing whereby trimming to a customer determined specification is performed on particular devices or components.

Where in embodiments of the present invention reference is made to a covering layer comprising a polymerisable liquid crystal, reference may be made to a covering layer comprising a mixture of liquid crystal materials containing a significant amount of polymerisable mesogens.

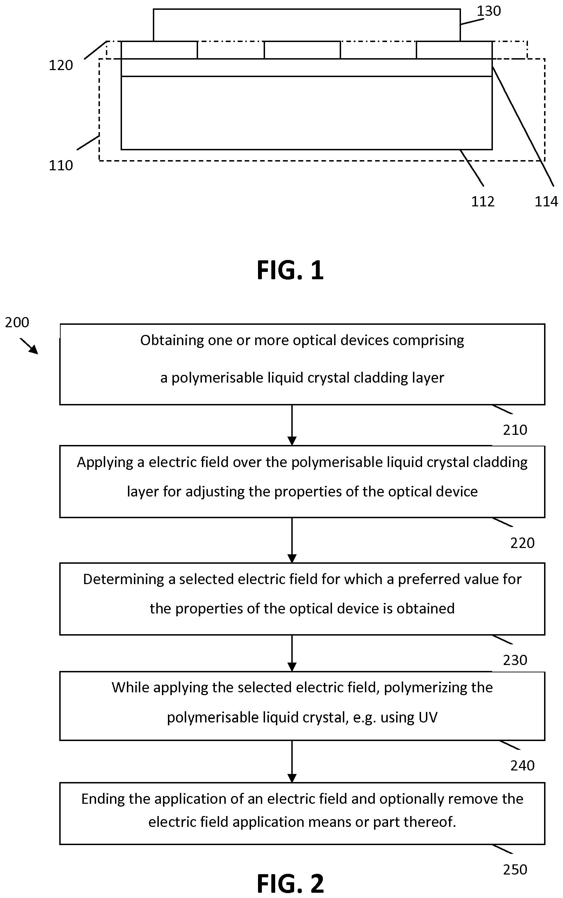

In one aspect the present invention relates to a photonic device comprising a covering layer comprising a polymerized liquid crystal. The trimmed photonic device 100, an example according to an embodiment of the present invention being indicated in FIG. 1, comprises at least one component 120 for supporting propagation of electromagnetic radiation in the device. The component 120 may be or may comprise for example a waveguide. The component may be an optical component. The component 120 may be any of an optical filter, an optical resonator, an optical coupler, a lens, etc or part thereof.lt may in particular embodiments be a ring resonator. The component 120 may comprise or may be deposited on a substrate 110. Such a substrate 110 may for example be a silicon substrate 112 and a silicon oxide layer 114 and the waveguide may be made of silicon, so that the photonic device is a silicon photonic device. The trimmed photonic device 100 furthermore comprises a covering layer comprising polymerized liquid crystal for the optical component, e.g. deposited directly on top of the optical component. The covering layer 130 comprising polymerized liquid crystal may be obtained by polymerization of any suitable polymerisable liquid crystal, using any suitable polymerization technique. Different types of polymerisable liquid crystal mixtures exist and these types can be classified by the way that the polymer network is topologically formed (e.g. LC network, LC side-chain network, LC main-chain network, etc.) or by the chemical structure of the reactive group (e.g. acrylates, epoxies, etc.). One particular example of an acrylate liquid crystal, embodiments of the present invention not being limited thereto, is RM105, a liquid crystal monomer as for example available from Merck. The covering layer 130 comprising polymerized liquid crystal thereby is polymerized in a state of polarization such that it is adapting the effective refractive index of the at least one optical component as wanted. In one set of examples, the polymerized liquid crystal cladding layer 130 may have an effective refractive index inducing a shift in a resonance or filtering wavelength of the at least one optical component 120 between 0 nm and 30 nm, e.g. up to 30nm. Trimming also may be performed with respect to the dispersion properties of waveguides, using methods according to embodiments of the present invention. The latter may for example be used for optimizing the phase matching conditions for non-linear optical processes such as four-wave mixing, supercontinuum generation, optical parametric amplification and oscillation, ... Further features of the trimmed device may correspond with features obtained through method steps of a method of trimming as indicated below.

In one aspect, the present invention relates to a method for trimming one or more photonic components. Photonic components that typically can benefit from a method and system for trimming according to embodiments of the present invention may be photonic components wherein radiation propagation is influenced by a covering layer. The latter may for example be a cladding material or an electromagnetic radiation guiding layer, such as for example in slotted waveguides or microwave applications. Such photonic components may for example be waveguide based photonic components. Such photonic components may for example be optical filters, optical resonators, optical couplers, etc. Such photonic components may for example be photonic components wherein the refractive index of one or more components is deterministic for operation of the component. A method according to embodiments of the present invention comprises obtaining one or more photonic devices comprising at least one component supporting propagation of electromagnetic radiation and a covering layer comprising a polymerisable liquid crystal. The covering layer may in particular examples be a cladding layer. It furthermore comprises determining, for a selected photonic device selected from the one or more photonic devices, a selected liquid crystal orienting condition to be applied to the polymerisable liquid crystal in the covering layer resulting in a preferred value for an electromagnetic property of the selected photonic device. It also comprises, while applying the liquid crystal orienting condition, polymerizing the polymerisable liquid crystal in the covering layer of said selected photonic device, thus obtaining a polymerized liquid crystal in said selected photonic device.
Further features and advantages of embodiments of the present invention will be illustrated below with reference to an exemplary method for trimming and with reference to FIG. 2 and 3, embodiments of the present invention not being limited thereby.
A first step 210 of the exemplary method comprises obtaining a photonic device comprising a covering layer comprising a polymerisable liquid crystal. The covering layer may be a cladding layer and the cladding layer may be part of, or on top of a waveguide. The polymerisable liquid crystal layer may be any type of polymerisable liquid crystal layer as described above. In the exemplary method trimming of silicon-on-insulator waveguide based photonic components is performed, but as already indicated, it will be clear that the method is not restricted by the particular type of photonic device used, or by the particular materials used. The effective index of the electromagnetic radiation guiding portion of the device typically is determined by the interaction of the electromagnetic radiation with the materials in which it propagates. As the propagating modes typically also have evanescent tails in cladding materials, these layers will contribute to the electromagnetic radiation behavior in the device. In embodiments of the present invention wherein for example an optical radiation property is influenced, this effect is used for adjusting the effective refractive index. In the present example, as the mode in the SOI waveguides has evanescent tails extending into the cladding layers, the cladding layers contribute to the effective index. In the present example, different cladding layers are present, one of these being a polymerisable liquid crystal cladding layer. The refractive index of the liquid crystal is determined by the interaction of the electric field components of the light with the relative dielectric constants of the LC. While the devices are designed for TE-polarized light, the mode has nonzero y- and z-components due to the small dimensions. The transverse x-component of the electric field is the strongest component in the Si, but near the sidewalls of the waveguide the longitudinal z-component is very strong. The y component is generally very small and we will not take it into account here. In the cells the liquid crystal director has an orientation parallel to the propagation direction of the light in the absence of an electric field, i.e. without applying an electric field, as shown in FIG. 3A.
A second step 220 of the exemplary method comprises applying a liquid crystal orienting condition, such as for example an electric field or temperature condition or magnetic field condition or a combination thereof, to the covering layer of polymerisable liquid crystal in the device. Applying such a liquid crystal orienting condition, e.g. electric field, may be applying a liquid crystal orienting condition in a direction so that the liquid crystal is responsive thereto, such as for example when applying an electric field typically in a direction perpendicular to the substrate or the polymerisable liquid crystal layer. Applying such a liquid crystal orienting condition may comprise applying subsequently different liquid crystal orienting conditions. For example, in some embodiments, this may comprise applying subsequently electric fields with different strengths, although embodiments of the present invention are not limited thereto. Applying an electric field perpendicular to the substrate reorients the director vertically, as illustrated in FIG. 3B. It is readily seen that in the initial orientation the x-component of the electric field experiences a low dielectric constant as the molecules present their short axis. The z-component 'sees' the long axis of the molecules and a high value of the dielectric constant. When the director turns, the z-component experiences a reduction in dielectric constant whereas the x-component does not see a change. These considerations indicate that the effective index will decrease when a voltage is applied and it is expected that for example in case of adjusting of a resonance wavelength of a ring resonator, this will shift towards shorter wavelengths. Applying an electric field may be performed in a non contact or in a contact mode. Similar states can be obtained through the application of magnetic fields or heat. One example of a contact mode is illustrated in FIG. 4 whereby on top of the polymerisable liquid crystal a conductive layer brought into contact with the liquid crystal using a contacting layer, e.g. an ITO layer on a glass substrate, into contact with the liquid crystal using a contacting layer. It is advantageous that materials can be used that can be removed without dentrimental effects on the polymerized liquid crystal covering layer after the trimming. As polymerization typically may be performed using UV irradiation, transparency of the electric field applying means may be a requirement, depending on the way the irradiation is applied.
A third step 230 of the exemplary method comprises determining a selected liquid crystal orienting condition, e.g. an electric field, for which a preferred value for the properties of the optical device resulting in a desired functionality of the optical device is obtained. In some embodiments, the applying step 220 also can considered being part of step 230. The latter may be performed by scanning a range of conditions, e.g. electric fields strengths, and by simultaneously measuring the electromagnetic parameter or parameters of the photonic device to be evaluated so that an optimum value can be selected from the obtained values for the parameter(s), or altering the electric field strength until an appropriate value is obtained, etc. The latter typically requires in situ measurement of the parameter. The electromagnetic parameter or parameters advantageously may be representative for part or all of the functionality of the optical device wherein the photonic component is used, the present step thus allowing to provide a feedback for the trimming based on the functionality of the optical device.
In a fourth step 240, when the preferred parameter value for the photonic component or the device using the component is determined, the polymerisable liquid crystal is fixated using polymerization e.g. by illumination with UV light. The latter has as an effect that the orientation of the director in the liquid crystal is fixed, thus fixing the refractive index and thus fixing the parameter value of the component or the device using the component. During this step the polymerisable liquid crystal becomes a polymerized liquid crystal. Illumination during application of the liquid crystal orienting condition over the polymerisable liquid crystal is illustrated in FIG. 3C.
In a fifth step 250, application of the liquid crystal orienting condition, e.g. applying an electric field, is ended. As the polymerization of the liquid crystal has resulted in a static adjustment of the photonic device by freezing the state of the liquid crystal, as indicated in FIG. 3D, ending the application of the condition does not have a further effect on the liquid crystal. Furthermore, depending on how the condition has been applied, the step may also comprise removing the liquid crystal orienting condition application means or part thereof. If for example the liquid crystal orienting condition application means is an electric field generator, the electric field generator may be applied using an additional electrode positioned on top of the liquid crystal, optionally through a contacting layer, the current step may comprise removing the additional electrode, advantageously in manner that so that there is no detrimental effect on the polymerized liquid crystal layer.

In some embodiments of the present invention, determining a selected liquid crystal orienting condition and polymerization may be performed on an individual photonic device or photonic integrated circuit. Typically an electric field strength then is applied to the cladding layer of the individual photonic device and the cladding layer is polymerized. An advantage of such an approach is that it is typically far less critical how focused the illumination of the polymerisable cladding layer is, as typically no other radiation sensitive layers are present.

In some embodiments of the present invention, determining a selected liquid crystal orienting condition and polymerization may be performed at least partly on a plurality of photonic devices or photonic integrated circuits. In one embodiment, the application of the condition can be local and specified for each photonic device or photonic integrated circuit separately but in a simultaneous way, i.e. using local condition application means, such as for example a patterned conductive layer allowing to induce different electric field strengths for different photonic devices. If for some or each selected photonic device the appropriate condition, polymerization can be performed simultaneously for these photonic device. If for some photonic devices in the group, the condition cannot be obtained simultaneously, such devices can be shielded from polymerization during polymerization of the other devices.

In cases wherein a plurality of photonic devices is to be trimmed, embodiments of the present invention also may be adapted for applying a liquid crystal orienting condition to the full group of photonic devices, although the condition is only optimum for one of these devices, and locally polymerizing that device, e.g. by focused irradiation and optionally masking.

In one aspect the present invention also relates to a system for obtaining a trimmed photonic device. The system typically comprises at least one component for supporting propagation of electromagnetic radiation and a covering layer comprising a polymerisable liquid crystal. The system typically also comprises a liquid crystal orienting condition application means being position for inducing a liquid crystal orienting condition in the polymerisable liquid crystal. The liquid crystal orienting condition application means may for example be an electric field generator comprising a conductive layer on top of the polymerisable liquid crystal, e.g. in the form of a conductive layer on a substrate like a glass substrate. The conductive layer may be spaced from the optical component using spacers, and the polymerisable liquid crystal may be provided in between the optical component and the conductive layer. An additional contacting layer for providing contact between the conductive layer and the polymerisable liquid crystal also may be provided. The system alternatively may comprise a non contact electric field providing means. The electric field application means is selected transparent for UV radiation, if the latter is used for polymerization. The system also may comprise a polymerization assisting means for polymerization of the polymerisable liquid crystal. Such a system may for example be a UV irradiation system. Further features of the system may correspond with features providing the functionality of the method embodiments as described above.

By way of illustration, embodiments of the present invention not being limited thereto, results for a number of experiments on ring resonators are discussed below, illustrating features and advantages of some embodiments. In the experiment below, the polymerizable liquid crystal (PLC) used is a a combination of three types of reactive mesogens (13.2% RM23, 22.1%RM82 and 53% RM257, all from Merck), a non-reactive liquid crystal (8.8% 5CB), an initiator (0.3% irgacure from Ciba) and an inhibitor (2.6% t-butylhydroquinone). The initiator enables polymerization by UV illumination. The inhibitor avoids chemical reactions with the environment. A small amount of non-reactive liquid crystal was added to obtain nematic phase at room temperature.

The optical properties of the PLC were determined with spectrometry. It was found that the ordinary refractive no index of the material increases from 1.55 to 1.65 for wavelengths from 400 nm to 700 nm. The extraodinary refractive index ne changes from 1.75 to 1.95 in this region. The birefringence was found between 0.24 and 0.28 for wavelengths between 400nm and 700nm. When a voltage was applied over the PLC, the molecules reorient themselves along the electric field, causing a decrease in birefringence. A low-frequency AC voltage was applied to prevent drift of ions in the LC. The material in each cell was polymerized under a different voltage by UV illumination. Polymerization caused a small decrease in Δn (< 5%), but the orientation of the mesogens is preserved for the most part. When the voltage was removed after polymerization, the birefringence did not change anymore. The molecules were frozen into their reoriented state. The calculated values of Δn at λ = 750 nm for five samples are given in Fig. 4.

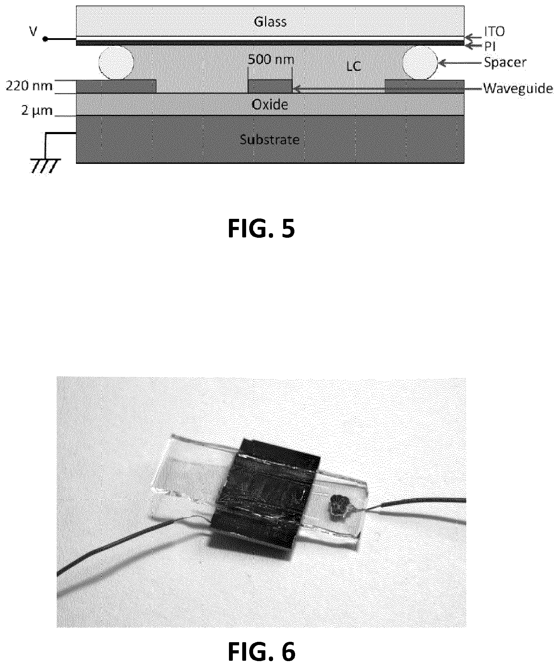

As indicated above, the experimental results obtained in the present example are based on a silicon-on-insulator chip whereby ring resonators are used, the ring resonators being the subject of the trimming. The silicon-on-insulator chip consists of a Si substrate, a 2 µm thick SiO2 layer and a 220 nm thick monocrystalline Si layer in which the waveguides and the ring resonators are defined. The SiO2 layer acts as an optical insulation layer in order to prevent leakage losses from the waveguides to the substrate. The waveguide dimensions can be very due to the high confinement factor of the material system. The waveguide width in the present example is 450 nm and the height is 220 nm. Bend radii of only a few µm are possible. In our experiments, the rings have a 6 µm radius. With UV-curable glue we attach a glass plate on top of the chip. Silica spacers with a radius of 3.4 µm control the spacing. The device is then heated on a hotplate together with the PLC. The PLC in its isotropic state is deposited near the gap between the chip and the glass. Capillary forces then cause the gap to fill with PLC. Finally, the device is cooled gradually to avoid the formation of domains. At room temperature the PLC is in its nematic state. Prior to assembly the glass plate was spin-coated with an alignment layer. In the experiments discussed here polyimide (PI) was used to form the alignment layer. After spin-coating and baking, the alignment layer was rubbed with a cloth. When LC comes into contact with the rubbed layer, the director will orient itself along the rubbing direction. In this way we can control the initial orientation of the director. The structure used for trimming, is illustrated in FIG. 5. Electrical wires are soldered to the substrate of the chip and the ITO on the glass plate as can be seen in the photographic picture shown in FIG. 6. When a voltage is applied between the ITO and the Si, an electric field arises with mainly a vertical component.

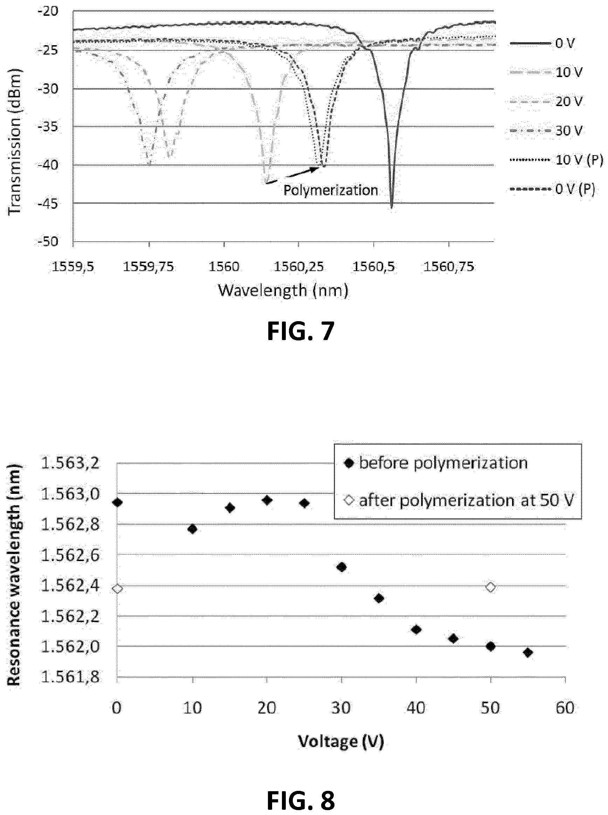

In the following experiments are discussed illustrating features of the trimming process. For optimizing the parameter of the photonic device, light from a tunable laser is coupled into the waveguide on the chip using grating couplers and the output is measured with a power meter for evaluation. The applied electric field used for controlling the polymerisable liquid crystal is a square wave of 1 kHz. Below a certain threshold value, the electric field is too weak to overcome the elastic forces between the LC molecules. Above threshold the director of the liquid crystal reorients allowing adjusting the resonance wavelength being the parameter to which the photonic device is trimmed. For increasing voltage, it was found that the resonance wavelength of the photonic device gradually shifts towards lower wavelengths. When the molecules of the liquid crystal were reoriented to their maximum angle, the shift saturates. The results of two experiments are shown. In Fig. 7 the transmission spectrum of the ring resonator for different voltages is shown. The spectrum after polymerization is also shown. Before polymerization, the shift is 0.4 nm at 10 V. Polymerization causes a small increase of the effective index and we see a red shift during polymerization. The blue shift after polymerization is 0.25 nm. In Fig. 8 the trace of the resonance wavelength of a ring resonator is shown. The values of the resonance wavelength after polymerization are also included. The maximum shift before polymerization is 0.91 nm. The sample was polymerized under an applied voltage of 50 V, corresponding to a blue shift before polymerization of 0.87 nm. After polymerization the blue shift is 0.56 nm.

In preferred embodiments of the method according to the present invention, the method may comprise steps which take into account a shift of the value of the electromagnetic property due to polymerization.

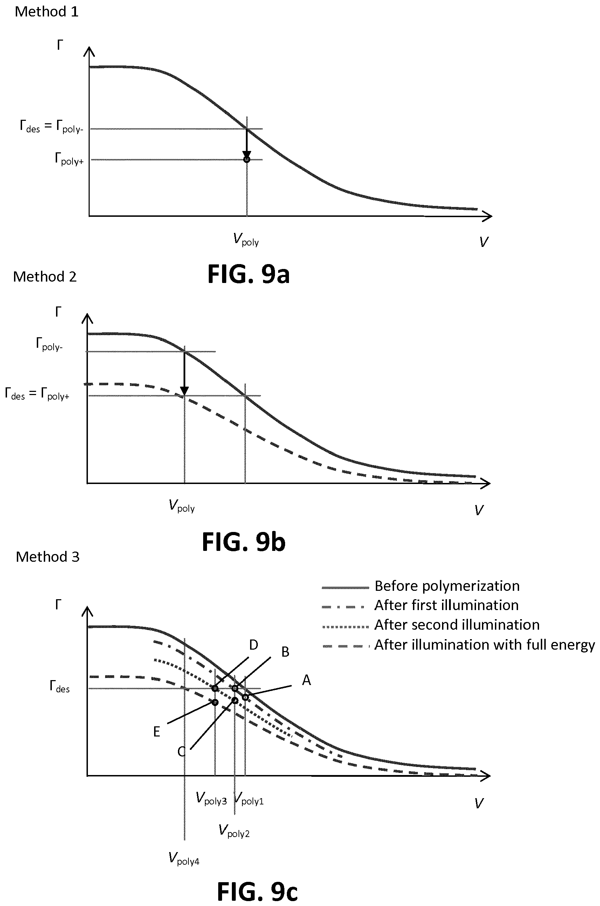

For some embodiments, the shift may be negligible. The voltage or any other parameter at which polymerization takes place may then be set such that Γ_{poly-}, i.e. the value of the electromagnetic property before polymerization, corresponds to the preferred value of the electromagnetic property (Γ_{des}). Neglecting of the shift that takes place due to polymerization is illustrated in FIG. 9a, where it is allowed that the electromagnetic property after polarization Γ_{poly+} differs from the preferred value for the electromagnetic property.

In configurations for which the shift is not negligible or intolerable, different techniques can be applied to make sure that Γ_{poly+} , i.e. the value of the electromagnetic property after polymerization, is equal to Γ_{des} , i.e. the preferred value of the electromagnetic property.

In a first technique the shift in electromagnetic property is taken into account by using calibrated data correlating the liquid crystal orienting condition to be applied to the polymerisable liquid crystal cladding layer on the one hand and the electromagnetic property of the selected photonic device obtained after polymerizing the liquid crystal cladding layer with the selected liquid crystal orienting condition on the other hand, thus taking into account a shift in electromagnetic property of the selected photonic device due to the polymerizing. In this first technique, the curves Γ_{poly-}(*V*) and Γ_{poly+}(*V*) are determined for predicting the shift due to polymerization. In order to obtain the preferred property after polymerization Γ_{des,} the polymerization voltage can be set to the appropriate voltage taking into account this shift. Although this method is simple to implement, it requires a lot of measurements to determine the curve Γ_{poly+}(*V*), because each point in the curve requires the polymerization of a cell (or part of a cell). The technique is illustrated in FIG. 9b, illustrating the determined curves Γ_{poly-}(*V*) and Γ_{poly+}(*V*).

Another technique makes use of a stepwise polymerization whereby the selected liquid crystal orienting condition to be applied to the polymerisable liquid crystal cladding layer resulting in a preferred value for an electromagnetic property of the selected photonic device are determined repeatedly and intermediately partly polymerizing the polymerisable liquid crystal cladding layer is applied. In this technique the shift due to polymerization thus is taken into account using a multistep polymerization. In the previously described methods the polymerization occurs in one step, i.e. the required illumination energy for full curing is applied in one step by regulating the UV intensity and illumination time. According to the current technique, the polymerization occurs in different steps. For each step, the applied illumination energy is smaller than the energy for full curing. This means that after one step the material is not fully polymerized and it is still possible to alter its properties by applying different voltages. After each step, the voltage is adapted in order to set the value of Γto Γ_{des}. As an example, a 3-step polymerization is shown in FIG. 9c. The cell is set to Γ_{des} by applying a voltage *V*_{poly1}. UV illumination is applied and we end up in point A. At this point the polymerization is not complete and it is still possible to change Γ to Γ_{des} by changing the voltage. Then we are in point B. At this point again UV illumination is applied and we end up at point C. Again the voltage is adapted to arrive in point D. Finally another UV illumination is applied such that the mixture is completely polymerized and we arrive in point E, which is close to the preferred property Γ_{des} . The more polymerization steps used, the closer the final value of the electromagnetic parameter Γ can be to the preferred value Γ_{des} of the electromagnetic parameter.

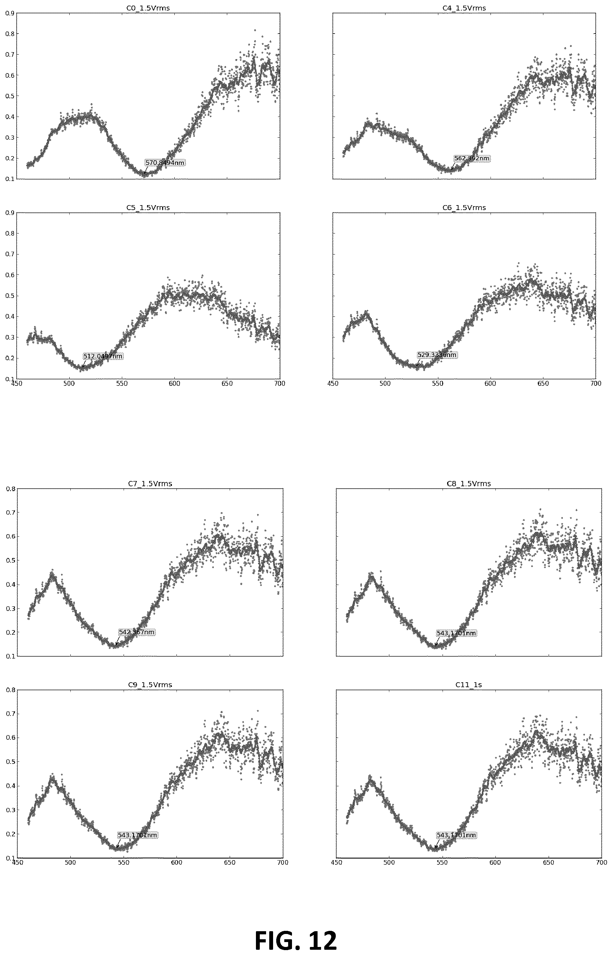

Another technique to take into account the shift due to polymerization uses a combination of the first and the second technique. Such combination allows to obtain the preferred property after curing more accurately, without the need to determine the curve Γ_{poly+}. In this method the polymerization occurs in steps, but instead of starting from a voltage corresponding to Γ_{des} a reasonable guess is used for the voltage such that the decrease (or increase) of Γ is anticipated after polymerization. An example of a multi-polymerization method and device will be described hereafter. A 20 µm thick liquid crystal cell with a polymerizable liquid crystal mixture was placed between crossed polarizers. The same composition of the liquid crystal mixture was used as described in Example 1 below. The transmission spectrum of the polarizers and liquid crystal cell was measured at the start and after each illumination step with the combination of a Xenon lamp (with UV filter) and a USB spectrometer. Each photopolymerization step was performed with an intensity of approximately 9 mW/cm² for 0.2 s. The UV light was generated by a UV illumination system (Omnicure S1000) consisting of a mercury lamp coupled to an optical fiber light guide with a collimation lens. Most of the intensity of the UV light was situated around 365 nm. The photopolymerization was performed with a 1.5 Vᵣₘₛ AC signal (1kHz) applied to the liquid crystal cell. The different transmission spectra for different steps in the polymerization can be found in FIG. 12.

In the table, the wavelength of a minimum in the transmission spectrum is plotted after each illumination step. It is clear from the table that there is an overall shift to shorter wavelengths, although individual photopolymerization steps may also exhibit a shift to longer wavelengths. There is a clear threshold for polymerization since the first three illumination steps do not lead to any shift in the wavelength. Only after step 4 a distinct shift in the wavelength is observed. After step 9 the reactive liquid crystal mixture appears to be fully cured. This experiment demonstrates some of the possibilities of the stepwise polymerization of the liquid crystal.

| UV illumination step number | Wavelength of minimum transmission (nm) | Wavelength shift compared to previous illumination step (nm) |
|---|---|---|
| 0 | 570.8494 | |
| 4 | 562.392 | -8.4574 |
| 5 | 512.0497 | -50.3423 |
| 6 | 529.3336 | 17.2839 |
| 7 | 542.367 | 13.0334 |
| 8 | 543.1701 | 0.8031 |
| 9 | 543.1701 | 0.0 |
| 11 | 543.1701 | 0.0 |

In the following example, using an almost identical setup, it is shown that after a number of polymerization steps, a change of voltage still leads to a shift in the wavevelength.

| UV illumination step number | Applied voltage (V) | Wavelength of minimum transmission (nm) | Wavelength shift compared to previous step (nm) |
|---|---|---|---|
| 0 | 1.6 | 518.5197 | |
| 2 | 1.6 | 521.5894 | 3.0697 |
| 2 | 2.0 | 496.6422 | -24.9472 |
| 3 | 2.0 | 496.8047 | 0.1625 |
| 4 | 2.0 | 530.6228 | 13.0334 |

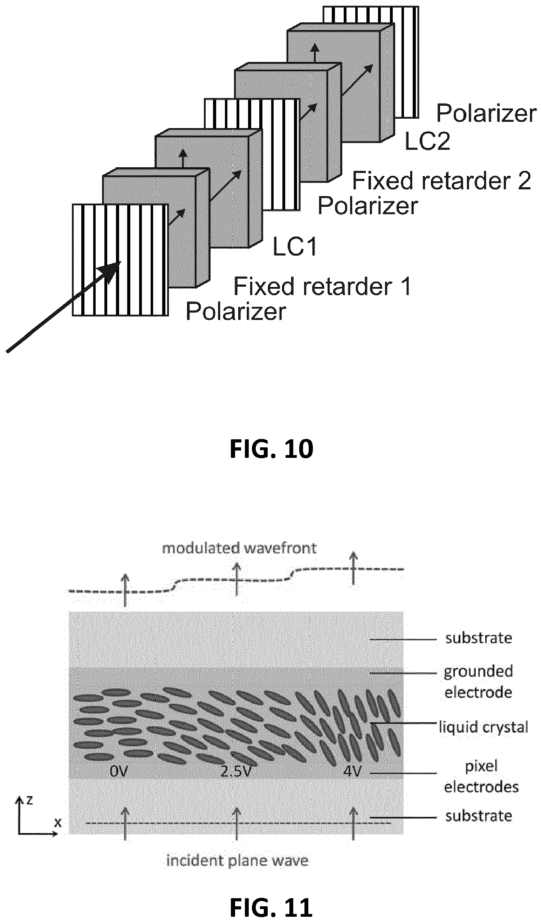

The method and device according to the present invention is not being limited to trimming of SOI ring resonators, but may be used in any application considered suitable by the person skilled in the art. Other applications, without being limited thereto, can be LC tunable filters, tunable lenses, tuning the transmission of microwaves through thin metal slits, as will be described hereunder. A first example is the use of a method and device according to the present invention in a LC tunable filter. Some optical devices are fabricated while being optimized for a certain parameter, such as the operating wavelength. These devices may share the same design, but contain one or more components which are used for optimizing the device for the preferred parameter. An example in which a retardation plate with certain retardation is necessary is in liquid crystal tunable filters. FIG. 10 shows a configuration for a liquid crystal tunable filter which is based on the Lyot principle. It consists of three parallel polarizers with between each polarizer a fixed retarder and a liquid crystal cell. The fixed retarder can be implemented similar as the liquid crystal cell, but filled with a polymerizable liquid crystal. The transmission of the whole device can be measured in a photospectrometer and fixing the retardation of the fixed retarders can be performed while measuring the transmission spectrum. The desired voltage is applied onto the polymerizable liquid crystal cells after which UV light is applied to these cells in order to photopolymerize the reactive liquid crystal.

A second example is the use in tunable lenses. Liquid crystals can be used to steer optical beams by inducing a blazed grating in a liquid crystal cell as shown in the FIG. 11 taken from "P. F. McManamon, P. J. Bos, M. J. Escuti, J. Heikenfeld, S. Serati, H. Xie and E. A. Watson, A Review of Phased Array Steering for Narrow-Band Electrooptical Systems, Proc. IEEE, Vol. 97, pp. 1078-1096, 2009". Liquid crystal lenses on the other hand can be used to make tunable lenses in which the focal distance of the lens can be varied "G. Q. Li, P. Valley, M. S. Giridhar, D. L. Mathine, G. Meredith, J. N. Haddock, B. Kippelen and N. Peyghambarian, Large-aperture switchable thin diffractive lens with interleaved electrode patterns, Applied Physics Letters, Vol. 89, pp. 141120, 2006". A review on beam steering and tunable lenses can be found in "J. Beeckman, K. Neyts and P. J. M. Vanbrabant, Liquid-crystal photonic applications, Optical Engineering, Vol. 50, pp. 081202, 2011". By replacing the non-reactive liquid crystal material in these devices by polymerizable liquid crystals, according to embodiments of the present invention, it is possible to set the angle of the beam and/or the focal distance of the beam to the preferred value by applying the correct voltages on the beam steering/tunable lens. By photopolymerizing the liquid crystal the correct angle and focal distance can be fixed.

Another example is the use of the device and/or method according to the present invention in filtering a desired frequency component in microwave or terahertz devices. In *"*J. R. Sambles, A. P. Hibbins, R. J. Kelly, J. R. Suckling and F. Yang, Microwaves: thin metal slits and liquid crystals., Integrated Optical Devices, Nanostructures, and Displays, Vol. 5618, pp. 1-14, 2004*"* it is shown that liquid crystals can be used to tune the transmission of microwaves through thin metal slits. It is shown that controlling the liquid crystal orientation by applying a voltage, allows switching on and off of the signal at 59.20 GHz. Also in the terahertz range, liquid crystals can be used to tune the transmission. In *"*S. A. Jewell, E. Hendry, T. H. Isaac and J. R. Sambles, Tuneable Fabry-Perot etalon for terahertz radiation, New Journal of Physics, Vol. 10, pp. 033012, 2008*"* the transmission of the signal at 0.6 THz can be changed by applying a voltage over the liquid crystal cell. Such systems can also be implemented with polymerizable liquid crystals, according to embodiments of the present invention. The anisotropy of non-reactive and reactive liquid crystals is similar in the terahertz and microwave region of the electromagnetic spectrum. The voltage is chosen in such a way that the transmission of a certain wavelength is as desired after which the orientation of the liquid crystal is fixed by photopolymerization.

It is an advantage of at least some embodiments according to the present invention that the component, after polymerization, is less influenced by temperature. In order to obtain this advantage, polymers may be chosen for the polymerisable liquid crystal, that have an opposite refractive index change as function of temperature with respect to one or more of the remaining components in the photonic device, e.g. with respect to silicon in case a silicon photonic device is trimmed. With design of the device design, the thermal behavior of the liquid crystal can be selected such that temperature influence can be very small or even cancelled out entirely.

## Claims

1. A method (200) for adapting and fixing an EM property of at least one photonic device to reach a desired functionality of the at least one photonic device, the method comprising
- obtaining (210) one or more photonic devices comprising at least one component for supporting propagation of electromagnetic radiation and a covering layer comprising polymerisable liquid crystal,
- determining (230), for a selected photonic device selected from the one or more photonic devices, based on an in situ measurement of a parameter of the selected photonic device, a selected liquid crystal orienting condition to be applied to the polymerisable liquid crystal covering layer resulting in a preferred value for an electromagnetic property of the selected photonic device, and
- while applying the selected liquid crystal orienting condition, polymerizing (240) the polymerisable liquid crystal in the covering layer of said selected photonic device, thus obtaining a polymerized liquid crystal on said selected photonic device.

2. A method (200) according to the previous claim, wherein determining (230) a selected liquid crystal orienting condition comprises subsequently applying different liquid crystal orienting conditions and evaluating an electromagnetic property of the selected photonic device for determining a selected liquid crystal orienting condition corresponding with a preferred value of the electromagnetic property of the selected photonic device.

3. A method (200) according to claim 2, wherein evaluating an electromagnetic property of the selected photonic device comprises measuring the electromagnetic property simultaneously with the application of the liquid crystal orienting condition.

4. A method (200) according to any of the previous claims, wherein applying the selected liquid crystal orienting condition comprises controlling a birefringence of the covering layer comprising the polymerisable liquid crystal of the selected photonic device.

5. A method (200) according to any of the previous claims, wherein the covering layer is a cladding layer and/or wherein the method (200) furthermore comprises, after said polymerizing (240), removing (250) the liquid crystal orienting condition.

6. A method (200) according to any of the previous claims wherein applying a liquid crystal orienting condition is applying an electric field, a magnetic field, an optical field or a variation in temperature.

7. A method (200) according to claim 6, wherein the method (200) comprises, after said polymerizing (240), removing (250) an electric field application means or part thereof from said polymerized liquid crystal and/or wherein for applying the selected electric field, the method comprises providing an electric field application means comprising a UV transparent electrically conductive layer on top of said cladding layer comprising the polymerisable liquid crystal.

8. A method (200) according to any of the previous claims, wherein applying the selected liquid crystal orienting condition during said polymerizing is performed individually on the selected photonic device to be trimmed and/or wherein the one or more photonic devices is a plurality of photonic devices on the same substrate and wherein applying the selected liquid crystal orienting conditions comprises applying the selected liquid crystal orienting conditions to the plurality of photonic devices and polymerizing, during said application of the selected liquid crystal orienting condition, only the covering layer of the polymerisable liquid crystal.

9. A method (200) according to any of the previous claims, wherein said polymerizing (240) comprises irradiating said polymerisable liquid crystal using ultraviolet radiation.

10. A method according to any of the previous claims, wherein said determining and said polymerizing comprises repeatedly determining a selected liquid crystal orienting condition to be applied to the polymerisable liquid crystal covering layer resulting in a preferred value for an electromagnetic property of the selected photonic device and intermediately partly polymerizing the polymerisable liquid crystal cladding layer.

11. A system (300) for obtaining a trimmed photonic device (100), the system (300) being adapted for performing a method according to any of claims 1 to 8, the system (300) comprising
- at least one component (120) for supporting propagation of radiation and a covering layer comprising a polymerisable liquid crystal (130),
- a liquid crystal orientation condition application means (310) being positioned for inducing a liquid crystal orientation condition in the covering layer (130) comprising polymerisable liquid crystal.

12. A system (300) according to claim 11, wherein the liquid crystal orientation condition application means (310) is an electric field application means comprising a UV transparent electrically conductive layer (312) positioned on top of the covering layer (130) comprising polymerisable liquid crystal.

## Patentansprüche

1. Verfahren (200) zum Anpassen und Fixieren der EM Eigenschaft zumindest eines fotonischen Bauelements zum Erreichen einer gewünschten Funktionalität des zumindest einen fotonischen Bauelements, wobei das Verfahren Folgendes umfasst
- Erhalt (210) eines oder mehrerer fotonischer Bauelemente, zumindest ein Bauelement zur Unterstützung der Ausbreitung von elektromagnetischer Strahlung umfassend, sowie eine Deckschicht, polymerisierbaren Flüssigkristall umfassend,
- Bestimmen (230), für ein ausgewähltes fotonisches Bauelement, das aus dem einen oder mehreren fotonischen Bauelementen ausgewählt wird, basierend auf einer vor Ort durchgeführten Messung eines Parameters des ausgewählten fotonischen Bauelements, der Orientierungsbedingung eines ausgewählten Flüssigkristalls, die auf die Deckschicht des polymerisierbaren Flüssigkristalls anzuwenden ist, wodurch sich ein bevorzugter Wert für eine elektromagnetische Eigenschaft des ausgewählten fotonischen Bauelements ergibt, und
- während der Anwendung der Orientierungsbedingung des ausgewählten Flüssigkristalls, Polymerisieren (240) des polymerisierbaren Flüssigkristalls in der Deckschicht des besagten ausgewählten fotonischen Bauelements, wodurch man einen polymerisierten Flüssigkristall auf dem besagten fotonischen Bauelement erhält.

2. Verfahren (200) nach dem vorhergehenden Anspruch, wobei das Bestimmen (230) einer Orientierungsbedingung eines ausgewählten Flüssigkristalls das anschließende Anwenden verschiedener Orientierungsbedingungen eines ausgewählten Flüssigkristalls und die Bewertung einer elektromagnetischen Eigenschaft des ausgewählten fotonischen Bauelements zur Bestimmung einer Orientierungsbedingung eines ausgewählten Flüssigkristalls umfasst, die einem bevorzugten Wert der elektromagnetischen Eigenschaft des ausgewählten fotonischen Bauelements entspricht.

3. Verfahren (200) nach Anspruch 2, wobei die Bewertung einer elektromagnetischen Eigenschaft des ausgewählten fotonischen Bauelements das Messen der elektromagnetischen Eigenschaft gleichzeitig mit der Anwendung der Orientierungsbedingung des Flüssigkristalls umfasst.

4. Verfahren (200) nach irgendeinem der vorhergehenden Ansprüche, wobei die Anwendung der Orientierungsbedingung des ausgewählten Flüssigkristalls die Steuerung einer Doppelbrechung der Deckschicht umfasst, welche den polymerisierbaren Flüssigkristall des ausgewählten fotonischen Bauelements umfasst.

5. Verfahren (200) nach irgendeinem der vorhergehenden Ansprüche, wobei die Deckschicht eine Mantelschicht ist und/ oder wobei das Verfahren (200) darüber hinaus, nach dem besagten Polymerisieren (240), das Entfernen (250) der Orientierungsbedingung des Flüssigkristalls umfasst.

6. Verfahren (200) nach irgendeinem der vorhergehenden Ansprüche, wobei die Anwendung einer Orientierungsbedingung eines Flüssigkristalls die Anwendung eines elektrischen Felds, eines Magnetfelds, eines optischen Felds oder einer Temperaturänderung ist.

7. Verfahren (200) nach Anspruch 6, wobei das Verfahren (200), nach der besagten Polymerisierung (240), das Entfernen (250) von Anwendungsmitteln eines elektrischen Feldes oder eines Teils davon vom besagten polymerisierten Flüssigkristall umfasst, und/ oder wobei das Verfahren zur Anwendung des ausgewählten elektrischen Feldes die Bereitstellung von Anwendungsmitteln eines elektrischen Feldes umfasst, die eine UV-transparente elektrisch leitende Schicht auf der Oberseite der besagten Mantelschicht umfassen, welche das polymerisierbare Flüssigkristall umfasst.

8. Verfahren (200) nach irgendeinem der vorhergehenden Ansprüche, wobei die Anwendung der Orientierungsbedingung des ausgewählten Flüssigkristalls während der besagten Polymerisierung einzeln auf dem ausgewählten zu trimmenden fotonischen Bauelement durchgeführt wird, und/ oder wobei das eine oder mehrere fotonische Bauelemente eine Vielzahl von fotonischen Bauelementen auf demselben Substrat sind und wobei die Anwendung der Orientierungsbedingungen des ausgewählten Flüssigkristalls die Anwendung der Orientierungsbedingungen des ausgewählten Flüssigkristalls auf die Vielzahl von fotonischen Bauelementen, und die Polymerisierung, während der besagten Anwendung der Orientierungsbedingung des ausgewählten Flüssigkristalls, nur der Deckschicht des polymerisierbaren Flüssigkristalls umfasst.

9. Verfahren (200) nach irgendeinem der vorhergehenden Ansprüche, wobei die besagte Polymerisierung (240) die Bestrahlung des besagten polymerisierbaren Flüssigkristalls unter Verwendung von ultravioletter Strahlung umfasst.

10. Verfahren (200) nach irgendeinem der vorhergehenden Ansprüche, wobei die besagte Bestimmung und die besagte Polymerisierung wiederholt die Bestimmung einer Orientierungsbedingung eines ausgewählten Flüssigkristalls umfasst, die auf die Deckschicht des polymerisierbaren Flüssigkristalls anzuwenden ist, wodurch sich ein bevorzugter Wert für eine elektromagnetische Eigenschaft des ausgewählten fotonischen Bauelements ergibt, und zwischenzeitlich die teilweise Polymerisierung der Mantelschicht des polymerisierbaren Flüssigkristalls.

11. System (300) zum Erhalt eines getrimmten fotonischen Bauelements (100), wobei das System (300) ausgeführt ist, um ein Verfahren nach irgendeinem der Ansprüche 1 bis 8 durchzuführen, wobei das System (300) Folgendes umfasst
- zumindest eine Komponente (120) zur Unterstützung der Ausbreitung von Strahlung, sowie eine Deckschicht, einen polymerisierbaren Flüssigkristall (130) umfassend,
- Anwendungsmittel (310) für eine Orientierungsbedingung eines Flüssigkristalls, die positioniert sind, um in der Deckschicht (130) eine Orientierungsbedingung eines Flüssigkristalls zu induzieren, die ein polymerisierbares Flüssigkristall umfasst.

12. System (300) nach Anspruch 11, wobei die Anwendungsmittel (310) für eine Orientierungsbedingung des Flüssigkristalls Anwendungsmittel eines elektrischen Feldes sind, die eine UV-transparente elektrisch leitende Schicht (312) umfassen, die auf der Oberseite der Deckschicht (130) positioniert sind, die das polymerisierbare Flüssigkristall umfasst.

## Revendications

1. Procédé (200) permettant d'adapter et de fixer une propriété EM d'au moins un dispositif photonique pour atteindre une fonctionnalité souhaitée de l'au moins un dispositif photonique, le procédé comprenant
- l'obtention (210) d'un ou plusieurs dispositifs photoniques comprenant au moins un composant permettant de prendre en charge la propagation d'un rayonnement électromagnétique et une couche de revêtement comprenant un cristal liquide polymérisable,
- la détermination (230), pour un dispositif photonique sélectionné sélectionné parmi le ou les dispositifs photoniques, sur la base d'une mesure in situ d'un paramètre du dispositif photonique sélectionné, d'une condition d'orientation de cristal liquide sélectionnée à appliquer à la couche de revêtement à cristal liquide polymérisable ayant pour résultat une valeur préférée pour une propriété électromagnétique du dispositif photonique sélectionné, et
- pendant l'application de la condition d'orientation de cristal liquide sélectionnée, la polymérisation (240) du cristal liquide polymérisable dans la couche de revêtement dudit dispositif photonique sélectionné, obtenant ainsi un cristal liquide polymérisé sur ledit dispositif photonique sélectionné.

2. Procédé (200) selon la revendication précédente, dans lequel la détermination (230) d'une condition d'orientation de cristal liquide sélectionnée comprend l'application ultérieure de différentes conditions d'orientation de cristal liquide et l'évaluation d'une propriété électromagnétique du dispositif photonique sélectionné afin de déterminer une condition d'orientation de cristal liquide sélectionnée correspondant à une valeur préférée de la propriété électromagnétique du dispositif photonique sélectionné.

3. Procédé (200) selon la revendication 2, dans lequel l'évaluation d'une propriété électromagnétique du dispositif photonique sélectionné comprend la mesure de la propriété électromagnétique en même temps que l'application de la condition d'orientation de cristal liquide.

4. Procédé (200) selon l'une quelconque des revendications précédentes, dans lequel l'application de la condition d'orientation de cristal liquide sélectionnée comprend le contrôle d'une biréfringence de la couche de revêtement comprenant le cristal liquide polymérisable du dispositif photonique sélectionné.

5. Procédé (200) selon l'une quelconque des revendications précédentes, dans lequel la couche de revêtement est une couche de gaine et/ou dans lequel le procédé (200) comprend en outre, après ladite polymérisation (240), le retrait (250) de la condition d'orientation de cristal liquide.

6. Procédé (200) selon l'une quelconque des revendications précédentes dans lequel l'application d'une condition d'orientation de cristal liquide est l'application d'un champ électrique, d'un champ magnétique, d'un champ optique ou d'une variation de température.

7. Procédé (200) selon la revendication 6, dans lequel le procédé (200) comprend, après ladite polymérisation (240), le retrait (250) d'un moyen d'application de champ électrique ou d'une partie de celui-ci à partir dudit cristal liquide polymérisé et/ou dans lequel pour l'application du champ électrique sélectionné, le procédé comprend la fourniture d'un moyen d'application de champ électrique comprenant une couche électroconductrice transparente aux UV sur ladite couche de gaine comprenant le cristal liquide polymérisable.

8. Procédé (200) selon l'une quelconque des revendications précédentes, dans lequel l'application de la condition d'orientation de cristal liquide sélectionnée durant ladite polymérisation est effectuée séparément sur le dispositif photonique sélectionné à ajuster et/ou dans lequel le ou les dispositifs photoniques sont une pluralité de dispositifs photoniques sur le même substrat et dans lequel l'application des conditions d'orientation de cristal liquide sélectionnées comprend l'application des conditions d'orientation de cristal liquide sélectionnées à la pluralité de dispositifs photoniques et la polymérisation, durant ladite application de la condition d'orientation de cristal liquide sélectionnée, uniquement de la couche de revêtement du cristal liquide polymérisable.

9. Procédé (200) selon l'une quelconque des revendications précédentes, dans lequel ladite polymérisation (240) comprend l'exposition dudit cristal liquide polymérisable à un rayonnement ultraviolet.

10. Procédé selon l'une quelconque des revendications précédentes, dans lequel ladite détermination et ladite polymérisation comprennent la détermination à plusieurs reprises d'une condition d'orientation de cristal liquide sélectionnée à appliquer à la couche de revêtement à cristal liquide polymérisable ayant pour résultat une valeur préférée pour une propriété électromagnétique du dispositif photonique sélectionné et la polymérisation partielle intermédiaire de la couche de gaine à cristal liquide polymérisable.

11. Système (300) permettant d'obtenir un dispositif photonique ajusté (100), le système (300) étant adapté pour mettre en oeuvre un procédé selon l'une quelconque des revendications 1 à 8, le système (300) comprenant
- au moins un composant (120) permettant de prendre en charge la propagation d'un rayonnement et une couche de revêtement comprenant un cristal liquide polymérisable (130),
- un moyen d'application de condition d'orientation de cristal liquide (310) qui est positionné pour induire une condition d'orientation de cristal liquide dans la couche de revêtement (130) comprenant un cristal liquide polymérisable.

12. Système (300) selon la revendication 11, dans lequel le moyen d'application de condition d'orientation de cristal liquide (310) est un moyen d'application de champ électrique comprenant une couche électroconductrice transparente aux UV (312) positionnée sur la couche de revêtement (130) comprenant un cristal liquide polymérisable.
